# EUROPÄISCHE PATENTSCHRIFT

(11) **EP 2 108 543 B1**
(45) Veröffentlichungstag und Bekanntmachung des Hinweises auf die Patenterteilung: **25.05.2011**
(21) Anmeldenummer: 08007007.1
(22) Anmeldetag: 09.04.2008
(51) Int. Cl.: B60P 3/00, B60P 7/10

(54) **Steuervorrichtung für Transportfahrzeuge**
Control device for transport vehicles
Dispositif de commande pour véhicules de transport

(43) Veröffentlichungstag der Anmeldung: 14.10.2009
(73) Patentinhaber: Langendorf GmbH, 45731 Waltrop (DE)
(72) Erfinder: Balke, Albert, 59394 Nordkirchen (DE)
(74) Vertreter: Meinke, Dabringhaus und Partner GbR

(56) Entgegenhaltungen:
- DE-A1- 3 804 845
- DE-A1- 19 644 749
- DE-U1- 8 906 771
- US-A- 4 626 017

## Beschreibung

Die Erfindung betrifft eine Vorrichtung zur Sicherung oder Fixierung von insbesondere flächigen Objekten auf einem Transportfahrzeug oder -anhänger mit wenigstens einem Schwenkausleger an einem fahrzeuggestützten Auflager, einer Anpressplatte oder dergleichen am freien Ende des Schwenkauslegers und mit einer Einrichtung zur Aufbringung der Anpresskraft des Schwenkauslegers am zu sichernden Objekt, wobei der Schwenkausleger hydraulisch aus seiner Ruhestellung in die Arbeitsstellung verbringbar ist.

Seit vielen Jahren sind Transportfahrzeuge, insbesondere zum stehenden bzw. leicht geneigten Transport großflächiger Glasscheibenpakete bekannt. Bei derartigen, sog. Glasinnenladern werden komplette A- oder L-förmige Traggestelle von einem rückwärts darunter fahrenden, nach hinten offenen U-förmigen Auflieger eines Transportfahrzeuges unterfahren, sodann pneumatisch und/oder hydraulisch angehoben und mittels Verspanneinrichtungen gesichert. Die Traggestelle liegen mit entsprechend passend ausgebildeten Auflageflächen dann auf den entsprechend ausgebildeten Rahmenlängsträgern bzw. daran angeordneten Auflagewinkeln der Sattelauflieger mit Tiefbett auf.

Grundlegend ist dies in der DE 35 16 914 C2 beschrieben. Dort ist eine in das Fahrzeug integrierte Sicherungsvorrichtung angegeben, die nach dem Beladen des Fahrzeugs mit dem beladenen Traggestell gegen die Glasscheibenpakete anlegbar, in dieser Sicherungsstellung verriegelbar und vor dem Entladen des Fahrzeugs in ihre Ruhestellung zurückverbringbar ist.

Seit einiger Zeit werden auch Betonfertigteile und sonstige, vorgefertigte schwere Baumaterialien mit Hilfe entsprechend angepasster Innenlader transportiert, ebenso wie Beton-, Ziegel- und Holzfertigwände oder Lärmschutzelemente. Diese sind auf sogenannten "Flats", also flachen Transportpaletten gelagert, die an ihrer Stirnseite ein Gerüst bzw. einen Bock mit bis zu 500 mm lange Haltedornen aufweisen, damit die senkrecht stehenden Fertigelemente nicht umfallen.

Die Bewegung der Verspanneinrichtungen erfolgt mittels hydraulischer Druckzylinder, die mit Hilfe entsprechender Lager an der Rahmenkonstruktion des Transportfahrzeuges, insbesondere an den entsprechend ausgestalteten Seitenwänden, angelenkt sind. Die Druckzylinder werden beispielsweise vom Führerhaus oder von einer Bedienungseinrichtung am Sattelauflieger bedient, wodurch die vorhandenen Verspanneinrichtungen gleichzeitig und mit gleichem Druck gegen die zu sichernden oder zu fixierenden Objekte, also die aufgenommene Ladung, angepresst werden. In dieser Arbeitsstellung werden die Verspanneinrichtungen arretiert bzw. festgelegt, so dass sie diese Sicherungsstellung beibehalten, bis sie zum Zweck des Entladens des Fahrzeugs wieder in ihre Ruhestellung gebracht werden, was wiederum durch Beaufschlagung der doppelt wirkenden Druckzylinder mit dem Druckmedium erfolgt.

Aus der OS 37 39 353 ist bekannt, zur Aufrechterhaltung des konstanten Drucks eines pneumatischen Systems über Schläuche und Füllleitungen eine Regeleinrichtung vorzusehen, die ihrerseits über eine Druckleitung mit einem oder mehreren Druckluftbehältern verbunden ist. Diese Regeleinrichtung enthält einen automatischen Druckregler, der dafür sorgt, dass beispielsweise bei Temperaturschwankungen, bei Undichtigkeiten im System oder bei Druckänderungen in Folge auftretender Zentrifugalkräfte während der Fahrt der Druck in der Füllleitung und damit der Anpressdruck der Verspanneinrichtungen konstant gehalten wird.

In der Praxis haben sich seit langem sog. Hydro-Push-Anlagen bewährt, bei denen die verspanneinrichtungen mittels hydraulischer Druckzylinder betätigt werden, und wobei ebenfalls eine Regeleinrichtung vorhanden ist, die für eine Aufrechterhaltung des gewünschten Anpressdrucks sorgt, wie sich dies ebenfalls beispielsweise aus der DE 35 16 114 C2 ergibt.

Aus der weiteren DE 196 44 749 A1 ist ebenfalls ein Regelsystem für Hydraulikkreisläufe mit jeweils mehreren Hydraulikzylindern bekannt. Dort sperren die jeweiligen Sperrventile jeweils ganze Hydraulikkreise mit jeweils mehreren Hydraulikzylindern ab.

In beiden Fällen der pneumatischen und der hydraulischen Betätigung findet regelmäßig ein Soll-/Ist-Abgleich des einzuhaltenden Anpressdrucks statt. Dies macht die gesamte Anlage relativ anfällig und kostenaufwendig. Bei einem eventuellen Defekt oder Druckverlust an einem einzelnen Zylinder kann es beispielsweise während längerer Fahrt oder während einer längeren Pause vorkommen, dass das Druckmedium, beispielsweise Hydrauliköl, entweicht und die Anlage ständig nachgeregelt wird, so dass irgendwann der notwendige Druck zur Sicherung der Ladung durch die Verspanneinrichtungen nicht mehr ausreicht, weil z.B. zuviel Hydrauliköl ausgelaufen ist. Beispielsweise kann es neben Undichtigkeiten auch zu sog. Setzerscheinungen kommen. Dies ist dadurch bedingt, dass zwischen den einzelnen Glaspaketen sog. "Spacer" angeordnet sind. Dabei handelt es sich um Abstandhalter, insbesondere aus Pappe, die sich bei längerer oder höherer Beanspruchung zusammendrücken, so dass die einzelnen Glaspakete dann enger aneinander anliegen mit der Folge, dass der Anpressdruck nicht mehr so hoch wie nötig ist.

Um die beschriebenen Nachteile zu vermeiden, hat es sich die vorliegende Erfindung zur Aufgabe gemacht, eine praktischere und kostengünstigere Lösung zu entwickeln, mit der zuverlässig der erforderliche Anpressdruck während der gesamten Beförderungsdauer sichergestellt wird.

Hierzu schlägt die Erfindung eine zentrale Steuereinrichtung und jedem Hydraulikzylinder zugeordnete Rückschlag- oder Sperrventile vor.

Durch die jedem Hydraulikzylinder zugeordneten Rückschlag- oder Sperrventile werden die einzelnen Schwenkausleger in ihrer jeweiligen Anpressstellung gehalten. Tritt an irgendeiner Stelle des Hydrauliksystems ein Schaden, insbesondere eine Undichtigkeit, Leckage oder dgl. auf, so ist dies für die Fixierung der einzelnen Schwenkausleger unschädlich, da diese durch die eingebauten Rückschlag- bzw. Sperrventile von dem Gesamtsystem und auch von den anderen Schwenkauslegern getrennt sind. Tritt hinter dem jeweiligen Rückschlag- oder Sperrventil im Bereich eines Schwenkauslegers eine Leckage auf, so betrifft diese nur den jeweils betroffenen einzelnen Schwenkausleger, ohne dass dieser Druckverlust die anderen Schwenkausleger und den auf die zu sichernde Ladung auszuübenden Anspressdruck beeinträchtigt oder beeinflusst. Da in der Regel eine Mehrzahl von Schwenkauslegern zur Sicherung der Ladung verwendet werden, ist der nachlassende Anpressdruck eines einzelnen Schwenkauslegers oder dessen Totalausfall in der Regel während einer Transportfahrt unschädlich.

Um schleichende bzw. geringfügigere Druckverluste im Bereich einzelner Schwenkausleger gleichwohl auszugleichen, sieht die Erfindung ebenfalls vor, dass der Druck regelmäßig in vorgegebenen Zeitintervallen automatisch nachgesteuert wird. Eine solche Nachsteuerung kann z.B. zeitabhängig erfolgen. Ebenso sieht die Erfindung auch vor, dass ein erster Steuerimpuls ausgelöst wird, wenn das Transportfahrzeug nach der Ladungsaufnahme erstmals eine bestimmte Geschwindigkeit, beispielsweise 40 km/h erreicht bzw. überschritten hat.

Die vorgesehene zentrale Steuerung der Vorrichtung löst deren bisherige Regelung in überraschend einfacher und kostengünstiger Art und Weise ab. Während bei im Stand der Technik bekannten Regelungseinrichtungen ein ständiger Soll-/Ist-Abgleich erfolgen muss, mit der Folge, dass zur Aufrechterhaltung des Anpressdrucks auch ständig genügend Druckmedium, insbesondere Hydrauliköl, bereitgestellt werden muss, und hierzu auch eine ständige Energieversorgung, insbesondere zur Betätigung der Hydraulikölpumpe sichergestellt sein muss, ist es durch die erfindungsgemäße neue Steuereinrichtung mit Rückschlag- oder Sperrventilen an jedem Hydraulikzylinder möglich, die gesamte Anlage nach dem Beladevorgang und vor Beginn des Transports in die Anpressstellung zuzufahren, ohne anschließend während des Transports noch in irgendeiner Weise eingreifen und nachsteuern zu müssen. Dies ermöglicht es insbesondere auch, Sattelauflieger von Zugfahrzeugen abzukoppeln und beispielsweise per Bahn oder Schiff an einen anderen Ort zu transportieren, wo sie dann mit einer anderen Zugmaschine wieder aufgenommen und weitertransportiert werden. Während dieser Zeit ist keine eigene Energieversorgung der Steuereinrichtung mehr nötig.

Die Erfindung sieht weiter vor, dass die Vorrichtung nach Einsteuerung des Anpressdrucks und Aufbringung der Anpresskraft außerhalb der Druckzylinder drucklos machbar ist. Das hat den Vorteil, dass die Vorrichtung beispielsweise gegenüber unbeabsichtigten Druckanstiegen, etwa durch starke Temperaturanstiege geschützt wird. Steigt der Druck in der Anlage, beispielsweise durch erhöhte Temperaturen, unbeabsichtigt an, so könnte es zu einem unbeabsichtigten Aufsteuern der doppelt wirksamen Rückschlag- bzw. Sperrventile kommen. Dies wird durch das Drucklosmachen des Systems außerhalb der Hydraulikzylinder vermieden.

Weiter sind auch zwei Druckschalter zur Einstellung und Limitierung des Einsteuerdrucks vorgesehen. Ebenso kann auch ein Druckmanometer zur Anzeige des eingesteuerten Drucks in das Hydrauliksystem vorgesehen sein, um den Einsteuerdruck überwachen zu können.

Beansprucht wird auch ein Verfahren zur Sicherung und/oder Fixierung von insbesondere flächigen Objekten auf einem Transportfahrzeug oder -anhänger mit wenigstens einem Schwenkausleger und einem fahrzeuggestützten Auflager, einer Anpressplatte oder dergleichen am freien Ende des Schwenkauslegers und mit einer Einrichtung zur Aufbringung der Anpresskraft des Schwenkauslegers am zu sichernden Objekt, wobei der Schwenkausleger hydraulisch aus seiner Ruhestellung in die Arbeitsstellung verbringbar ist und wobei die Vorrichtung eine zentrale Steuereinrichtung und jeder Hydraulikzylinder ein Rückschlagventil oder Sperrventil aufweist, wobei der Druck regelmäßig in vorgegebenen Zeitintervallen und/oder bei erstmaligem Erreichen einer bestimmten Transportgeschwindigkeit nach der Aufnahme eines zu sichernden Objekts automatisch nachsteuerbar ist.

Ebenso beansprucht wird ein Verfahren, bei dem die Vorrichtung nach Einsteuern des Anpressdrucks und Aufbringung der Anpresskraft außerhalb der Druckzylinder drucklos gemacht wird.

Die Erfindung ist nachstehend anhand der Zeichnung beispielhaft näher erläutert. Diese zeigt in:

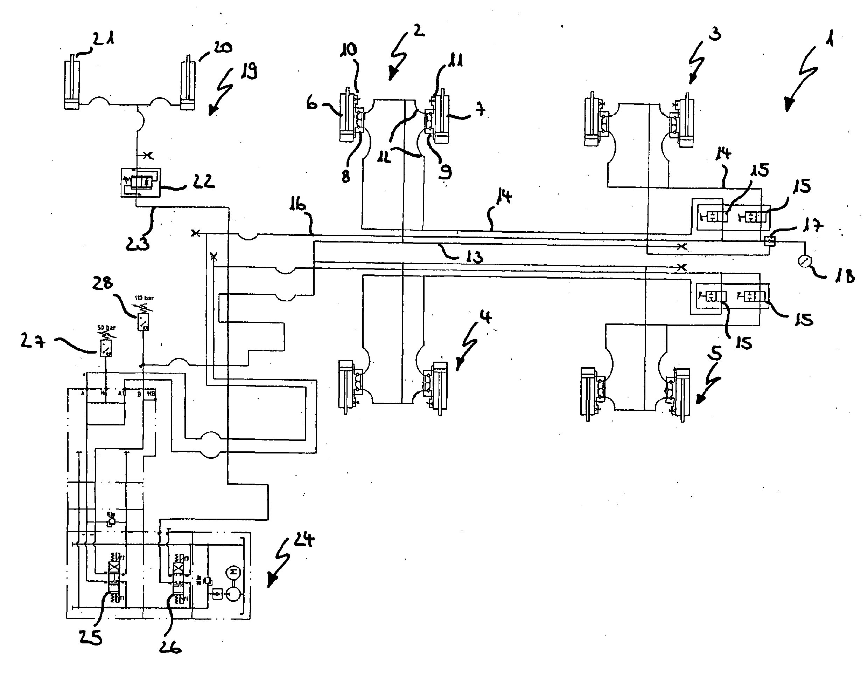

- Fig. 1: ein Schaltbild einer Hydraulikverspannung mit dop- pelt entsperrbaren Lasthalteventilen.

Die Zeichnung zeigt in der einzigen Fig. 1 das Schaltbild einer erfindungsgemäßen Hydraulikverspannung, die allgemein mit dem Bezugszeichen 1 versehen ist. Die Hydraulikverspannung 1 ist in einem nicht näher dargestellten Transportfahrzeug für flächige Objekte angeordnet. Die Hydraulikverspannung 1 weist vier nicht im Einzelnen dargestellte Schwenkausleger 2, 3, 4 und 5 auf, die dazu dienen, die flächigen Objekte im Inneren des Transportfahrzeugs zu fixieren. Sie können über jeweils eine Hydraulikeinheit bewegt werden. Jede der einzelnen Hydraulikeinheiten weist zwei Hydraulikzylinder 6 bzw. 7 auf, die über eine entsprechende Ansteuerung durch Anlegen eines Hydraulikdrucks in beide Richtungen bewegbar sind. Die Anschlüsse jedes der Hydraulikzylinder 6 bzw. 7 sind über doppelt entsperrbare Rückschlagventile 8 oder 9 über flexible Hydraulikleitungen 12 mit den Hydrauliksteuerleitungen 13 bzw. 14 verbunden. Zwischen den Rückschlagventilen 8 bzw. 9 und den Hydraulikzylindern 6 bzw. 7 sind noch Blenden 10 oder 11 angeordnet.

Die Anschlussleitungen 14 der in Verspannungsrichtung wirkenden Hydraulikanschlüsse der Hydraulikzylinder 6 bzw. 7 sind über Absperrhähne 15 mit dem zentralen Hydraulikkreis 16 für die Verspannungsrichtung 1 verbunden. Weiterhin ist ein hydraulisch entsperrbares Rückschlagventil 17 zwischen den in Verspannungsrichtung wirkenden und den gegen die Verspannungsrichtung wirkenden Hydraulikkreisen 13 und 16 vorgesehen, das mit einem Druckmanometer 18 ausgestattet ist.

Ebenfalls im Transportfahrzeug befindet sich eine nicht näher dargestellte Hubschwinge 19, die ebenfalls mittels Hydraulikzylindern 20, 21 bewegt werden kann und über ein Senkbremsventil 22 an den Hydraulikkreis 23 angebunden ist.

Zur Steuerung der gesamten Anordnung dient ein elektrohydraulisches Pumpaggregat mit Steuereinrichtung 24. Hierüber lässt sich der Hydraulikdruck für die gesamte Anlage bereitstellen und steuern. Es sind zwei Steuerventile 25 und 26 vorgesehen, von denen das erste Steuerventil 25 zur Vorwärts- bzw. Rückwärtsbewegung der Schwenkausleger 2, 3, 4 und 5 dient und das Steuerventil 26 zur Ansteuerung der zur Schubrichtung wirkenden Hydraulikzylinder 20 und 21 der Hubschwinge dient.

Die Funktion der Erfindung geschieht dabei wie folgt:

Über ein entsprechendes Steuersignal können mittels des Steuerventils 26 die Hydraulikzylinder 20, 21 der Hubschwinge 19 mit Druck beaufschlagt und somit in Schubrichtung hydraulisch bewegt werden. Zum Absenken dient das Senkbremsventil 22, über das eine kontrollierte Absenkung der Schwinge 19 erfolgen kann.

Die Schwenkausleger 2, 3, 4 oder 5 werden durch entsprechende Steuerimpulse des Steuerventils 26 entweder in Schub- oder Zugrichtung bewegt. Über einen Steuerimpuls wird die Hydraulikleitung 16 mit dem hydraulischen Arbeitsdruck beaufschlagt. Sofern die Absperrhähne 15 geöffnet sind, was für die Funktion des jeweiligen Schwenkauslegers 2, 3, 4 oder 5 die Voraussetzung ist, wird daraufhin die doppelt entsperrbaren Rückschlagventile 8 und 9 für die Schubrichtung entsperrt und die Zylinder 7 bzw. 6 können sich in Schubrichtung bewegen. Durch die Parallelschaltung aller vier Schwenkausleger 2, 3, 4, 5 wird diese Bewegung bei allen Auslegern 2, 3, 4, 5 gemeinsam ausgeführt, für die der zugehörige Absperrhahn 15 geöffnet ist.

Sobald die Schubbewegung abgeschlossen ist und das zu sichernde Objekt mit dem entsprechenden Anpressdruck sicher gehalten wird, kann dann der Arbeitsdruck durch Abschalten des Steuerventils 26 aus dem zentralen Hydraulikkreis 16 abgenommen werden. In diesem Fall sperren die hydraulisch doppelt entsperrbaren Rückschlagventile 8 bzw. 9 der Schwenkausleger 2, 3, 4 und 5 in beide Richtungen, so dass der jeweilig dazugehörige Hydraulikzylinder 6 bzw. 7 in seiner Position mit dem vorher anliegenden Anpressdruck gehalten wird.

Sollen die Schwenkausleger 2, 3, 4 und 5 zur Freigabe der Ladung wieder zurückgezogen werden, wird vom Steuerventil 26 ein entsprechender Arbeitsdruck auf die entgegengesetzten Hydraulikkreise 13 aufgeschlagen. Dieser sorgt dafür, dass die doppelt entsperrbaren Rückschlagventile 8 bzw. 9 in der Zugrichtung entsperrt werden, und so eine Zurückbewegung der Zylinder 6 und 7 möglich wird.

Zusätzlich ist eine nicht näher dargestellte Steuervorrichtung vorgesehen, die mittels zweier Druckschalter 27 und 28 den Hydraulikdruck im System überwacht. Diese dient dazu, nach dem erstmaligen Einstellen der hydraulischen Schwenkausleger 2, 3, 4 und 5 eine automatische Nachsteuerung des Hydraulikdrucks zu gewährleisten. Hierbei sind verschiedene Steuerarten möglich. Bei der Zeitsteuerung wird mittels eines Steuerprogramms dafür gesorgt, dass in regelmäßigen Abständen der gewünschte Druck auf die Hydraulikkreise 16 bzw. 14 beaufschlagt wird, und so, für den Fall, dass z.B. einer der Zylinder 6, 7 eine Leckage aufweist, eine automatische Nachsteuerung und Druckerhaltung ermöglicht wird. Durch die Rückschlagventile 8 und 9 ist es allerdings nicht nötig, diesen Druck ständig aufrecht zu erhalten, da ansonsten durch die Ventile 8 und 9 für eine sichere Druckhaltung gesorgt wird.

Bei einer anderen oder zusätzlich vorgesehenen Betriebsart der Steuerung wird abhängig von der Fahrzeuggeschwindigkeit für eine Nachsteuerung des Drucks gesorgt. Hier ist es möglich, bei Erreichen einer bestimmten Fahrzeuggeschwindigkeit, beispielsweise wenn diese erstmalig 40 km/h übersteigt, für eine automatische Nachsteuerung des Drucks zu sorgen.

Natürlich ist die Erfindung nicht auf die dargestellten Ausführungsbeispiele beschränkt. Weitere Ausgestaltungen sind möglich, ohne den Grundgedanken zu verlassen. Die erfindungsgemäße Lösung eignet sich auch für den trimodalen Transport zur Straße, auf der Schiene und dem Wasser bzw. einer Fähre.

Ebenso kann eine entsprechend modifizierte Steuer- statt einer Regeleinrichtung auch im Pneumatik-System vorgesehen sein.

## Patentansprüche

1. Vorrichtung zur Sicherung und/oder Fixierung von insbesondere flächigen Objekten auf einem Transportfahrzeug oder -anhänger mit wenigstens einem Schwenkausleger an einem fahrzeuggestützten Auflager, einer Anpressplatte oder dergleichen am freien Ende des Schwenkauslegers und mit einer Einrichtung zur Aufbringung der Anpresskraft des Schwenkauslegers am zu sichernden Objekt, wobei der Schwenkausleger hydraulisch aus seiner Ruhestellung in die Arbeitsstellung verbringbar ist,
**dadurch gekennzeichnet,**
**dass** die Vorrichtung eine zentrale Steuereinrichtung (24) und jeder Hydraulikzylinder (6, 7) ein Rückschlagventil (8, 9) oder ein Sperrventil aufweist.

2. Vorrichtung nach Anspruch 1,
**dadurch gekennzeichnet,**
**dass** der Druck regelmäßig in vorgegebenen Zeitintervallen automatisch nachsteuerbar ist.

3. Vorrichtung nach Anspruch 1,
**dadurch gekennzeichnet,**
**dass** der Druck bei erstmaligem Erreichen einer bestimmten Transportgeschwindigkeit nach der Aufnahme eines zu sichernden Objekts automatisch nachsteuerbar ist.

4. Vorrichtung nach Anspruch 1,
**dadurch gekennzeichnet,**
**dass** die Vorrichtung nach Einsteuern des Anpressdrucks und Aufbringung der Anpresskraft außerhalb der Hydraulikzylinder (6, 7) drucklos machbar ist.

5. Vorrichtung nach Anspruch 1,
**dadurch gekennzeichnet,**
**dass** zwei Druckschalter (27, 28) zur Einstellung und Limitierung des Einsteuerdrucks vorgesehen sind.

6. Vorrichtung nach Anspruch 1,
**dadurch gekennzeichnet,**
**dass** ein Druckmanometer (18) zur Anzeige des eingesteuerten Drucks in das Hydrauliksystem integriert ist.

7. Verfahren zur Sicherung und/oder Fixierung von insbesondere flächigen Objekten auf einem Transportfahrzeug oder -anhänger mit wenigstens einem Schwenkausleger (2, 3, 4, 5) und einem fahrzeuggestützten Auflager, einer Anpressplatte oder dergleichen am freien Ende des Schwenkauslegers (2, 3, 4, 5) und mit einer Einrichtung zur Aufbringung der Anpresskraft des Schwenkauslegers (2, 3, 4, 5) am zu sichernden Objekt, wobei der Schwenkausleger (2, 3, 4, 5) hydraulisch aus seiner Ruhestellung in die Arbeitsstellung verbringbar ist und wobei die Vorrichtung eine zentrale Steuereinrichtung (24) und jeder Hydraulikzylinder (6, 7) ein Rückschlagventil (8, 9) oder Sperrventil aufweist,
**dadurch gekennzeichnet,**
**dass** der Druck regelmäßig in vorgegebenen Zeitintervallen und/oder bei erstmaligem Erreichen einer bestimmten Transportgeschwindigkeit nach der Aufnahme eines zu sichernden Objekts automatisch nachgesteuert wird.

8. Verfahren nach Anspruch 7,
**dadurch gekennzeichnet,**
**dass** die Vorrichtung nach Einsteuern des Anpressdrucks und Aufbringung der Anpresskraft außerhalb der Hydraulikzylinder (6, 7) drucklos gemacht wird.

## Claims

1. Apparatus for securing and/or fixing in particular flat articles on a transport vehicle or trailer, comprising at least one pivotal extension arm on a vehicle-supported carrier, a pressure plate or the like at the free end of the pivotal extension arm and a device for applying the pressure force of the pivotal extension arm to the article to be secured, wherein the pivotal extension arm can be moved hydraulically from its rest position into the working position,
**characterised in that**
the apparatus has a central control device (24) and each hydraulic cylinder (6, 7) has a non-return valve (8, 9) or a stop valve.

2. Apparatus according to claim 1 **characterised in that** the pressure can be automatically re-adjusted regularly at predetermined time intervals.

3. Apparatus according to claim 1 **characterised in that** the pressure can be automatically re-adjusted when a given transport speed is first achieved after picking up an article to be secured.

4. Apparatus according to claim 1 **characterised in that** the apparatus can be rendered pressure-less outside the hydraulic cylinders (6, 7) after initiation of the pressure force and application of the pressure force.

5. Apparatus according to claim 1 **characterised in that** there are provided two pressure switches (27, 28) for setting and limiting the initiation pressure.

6. Apparatus according to claim 1 **characterised in that** a pressure gauge (18) for displaying the initiated pressure is integrated in the hydraulic system.

7. A method of securing and/or foxing in particular flat articles on a transport vehicle or trailer, comprising at least one pivotal extension arm (2, 3, 4, 5) and a vehicle-supported carrier, a pressure plate or the like at the free end of the pivotal extension arm (2, 3, 4, 5) and a device for applying the pressure force of the pivotal extension arm (2, 3, 4, 5) to the article to be secured, wherein the pivotal extension arm (2, 3, 4, 5) can be moved hydraulically from its rest position into the working position and wherein the apparatus has a central control device (24) and each hydraulic cylinder (6, 7) has a non-return valve (8, 9) or a stop valve,
**characterised in that**
the pressure is automatically re-adjusted regularly at predetermined time intervals and/or when a given transport speed is first achieved after picking up an article to be secured.

8. A method according to claim 7 **characterised in that** the apparatus can be rendered pressure-less outside the hydraulic cylinders (6, 7) after initiation of the pressure force and application of the pressure force.

## Revendications

1. Dispositif pour le blocage et/ou la fixation d'objets, en particulier plats, sur un véhicule ou, une remorque de transport comprenant au moins un bras pivotant sur un support soutenu sur le véhicule, une plaque de pressage ou similaire à l'extrémité libre du bras pivotant et comprenant un moyen pour appliquer la force de pressage du bras pivotant sur l'objet à bloquer, dans lequel le bras pivotant est susceptible d'être amené par des moyens hydrauliques depuis sa position de repos jusque dans la position de travail,
**caractérisé en ce que**
le dispositif comprend un système de commande central (24), et chaque vérin hydraulique (6, 7) comprend un clapet antiretour (8, 9) ou une soupape d'arrêt.

2. Dispositif selon la revendication 1,
**caractérisé en ce que** la pression peut être automatiquement réajustée régulièrement à des intervalles temporels prédéterminés.

3. Dispositif selon la revendication 1,
**caractérisé en ce que** la pression peut être automatiquement réajustée après avoir atteint une première fois une vitesse de transport déterminée après la prise d'un objet à bloquer.

4. Dispositif selon la revendication 1,
**caractérisé en ce que** le dispositif peut être amené à pression nulle après pilotage de la pression de pressage et application de la force de pressage à l'extérieur des vérins hydrauliques (6, 7).

5. Dispositif selon la revendication 1,
**caractérisé en ce qu'**il est prévu deux commutateurs à pression (27, 28) pour le réglage et la limitation de la pression de pilotage.

6. Dispositif selon la revendication 1,
**caractérisé en ce qu'**un manomètre de pression (18) est intégré pour l'affichage de la pression de commande injectée dans le système hydraulique.

7. Procédé pour le blocage et/ou la fixation d'objets, en particulier plat, sur un véhicule ou, une remorque de transport comprenant au moins un bras pivotant (2, 3, 4, 5) et un support soutenu sur le véhicule, une plaque de pressage similaire à l'extrémité libre du bras pivotant (2, 3, 4, 5), et comprenant un moyen pour appliquer la force de pressage du bras pivotant (2, 3, 4, 5) sur l'objet à bloquer, dans lequel le bras pivotant (2, 3, 4, 5) peut être amené par voie hydraulique depuis sa position de repos jusque dans la position de travail, et le dispositif comprend un système de commande central (24), et chaque cylindre hydraulique (6, 7) comprend un clapet antiretour (8, 9) ou une vanne d'arrêt ; **caractérisé en ce que**
la pression est automatiquement réajustée régulièrement à intervalles temporels prédéterminés et/ou lorsqu'on atteint pour la première fois une vitesse de transport déterminée après la prise d'un objet à bloquer.

8. Procédé selon la revendication 7,
**caractérisé en ce que**, après établissement de la pression de pressage et application de la force de pressage, le dispositif est amené à pression nulle à l'extérieur des cylindres hydrauliques (6, 7).
